Europäisches Patentamt

European Patent Office

Office européen des brevets

(11) Numéro de publication: **0 022 167**
A1

## (12) DEMANDE DE BREVET EUROPEEN

(21) Numéro de dépôt: 80102908.3

(22) Date de dépôt: 24.05.80

(51) Int. Cl.³: **E 06 B 3/72**
**B 29 D 27/04**

(30) Priorité: 09.07.79 LU 81479

(43) Date de publication de la demande:
**14.01.81 Bulletin 81 2**

(84) Etats Contractants Désignés:
AT BE CH DE FR GB IT LI NL SE

(71) Demandeur: PARA-PRESS S.A. Société dite:
Boîte postale 15
Bettembourg(LU)

(72) Inventeur: Resibois, Raymond
rue du 700e 34
Virton(BE)

(74) Mandataire: Meyers, Ernest
c·o FREYLINGER & ASSOCIES Postfach 1153, 46 rue du
Cimetière
Luxemburg(LU)

(54) Procédé de fabrication d'un vantail de porte de caravane et vantail obtenu par la mise en oeuvre de ce procédé.

(57) Le vantail comporte un panneau extérieur (26) et un panneau intérieur (30), un corps (24) en matière synthétique, ainsi qu'un cadre périphérique (32). En vue d'une fabrication rapide et bon marché, on empile un certain nombre de ces éléments dans une presse en les faisant alterner avec des plaques de séparation et on injecte à l'intérieur des plaques de séparation et des cadres la matière synthétique destinée à former le corps (24) après expansion.

FIG. 1

EP 0 022 167 A1

Croydon Printing Company Ltd

- 1 -

La présente invention concerne un procédé de fabrication d'un vantail de porte de caravane comprenant essentiellement un panneau extérieur et un panneau intérieur appliqués de part et d'autre d'un corps en matière synthétique, ainsi qu'un cadre périphérique. L'invention concerne également un vantail réalisé par la mise en oeuvre de ce procédé.

De tels vantaux de porte sont bien connus et sont généralement obtenus en partant d'une plaque en matière synthétique que l'on encadre par une armature en bois sur laquelle on visse ensuite un cadre périphérique. Les deux panneaux sont ensuite appliqués sur les deux faces au moyen d'une colle adhésive. Ce type de vantail nécessite une armature en bois entre la matière synthétique et le cadre afin de pouvoir visser et fixer celui-ci. Outre la nécessité de réaliser la fixation au moyen de vis et, par conséquent, de devoir forer des trous au préalable, il est nécessaire de prévoir des équerres, ce qui allonge le temps de fabrication et nécessite beaucoup de main d'oeuvre.

Le but de la présente invention est de prévoir un nouveau vantail de porte de caravane d'une constitution plus simple et au moins aussi solide que les vantaux connus, ainsi qu'un nouveau procédé de fabrication d'un tel vantail qui permet une réduction sensible de la main d'oeuvre et accroît la rapidité de production.

A cet effet, le procédé de fabrication d'un vantail de porte de caravane selon l'invention est essentiellement caractérisé en ce que l'on empile dans une presse alternativement un certain nombre de plaques de séparation rigides revêtues d'une matière souple ainsi que des éléments de vantaux comprenant au moins le cadre périphérique, en ce que l'on actionne la presse pour serrer, de manière sensiblement étanche, chaque élément entre les deux plaques adjacentes, en ce que l'on injecte à travers un trou dans chacun des cadres de la matière synthétique, en ce que l'on maintient l'empilement dans la presse jusqu'à ce que la matière synthétique injectée se soit expansée et solidifiée et en ce que l'on extrait les éléments avec le corps solidifié de la presse.

- 2 -

La finition du vantail est réalisée en collant sur chaque élément le panneau extérieur et le panneau intérieur et en appliquant un ou plusieurs joints de finition ou d'étanchéité à l'intersection du cadre et des panneaux.

Selon un mode de réalisation avantageux, lesdits éléments empilés dans la presse comportent déjà un ou même deux panneaux, de sorte qu'il ne reste plus qu'à appliquer le ou les joints de finition ou d'étanchéité après avoir sorti les éléments de la presse. Ce procédé repose sur le caractère adhésif de la matière synthétique utilisée qui, en se solidifiant assure une liaison solide avec chacun des panneaux associés. Etant donné que ce procédé permet d'épargner l'opération ultérieure de collage, il sera mis en oeuvre, de préférence, chaque fois que c'est possible.

Le cadre périphérique est formé par assemblage d'éléments profilés à l'aide de pièces de raccord assurant un clavetage durable entre les extrémités des éléments à assembler.

Lors de l'empilement il est avantageux d'incorporer entre chaque couple de plaques de séparation, à l'endroit prévu pour la serrure ou autre ouverture une entretoise pour conserver un espace creux non envahi par la matière injectée.

Ce procédé de fabrication a le double avantage de permettre la fabrication d'un grand nombre de vantaux en une seule opération et d'éliminer tout recours à une vis ou moyen équivalent de fixation mécanique et, par la même occasion, le risque d'une mauvaise fixation ou d'une fixation non étanche.

Le vantail de porte obtenu selon la présente invention par la mise en oeuvre du procédé précité est essentiellement caractérisé par un corps en matière synthétique expansée à l'intérieur du cadre périphérique, le panneau extérieur et le panneau intérieur adhérant solidement sur l'ensemble formé par le cadre et le corps.

Le cadre est constitué par un ou plusieurs éléments profilés réunis bout à bout et présentant, du côté du corps du vantail deux flancs formant respectivement avec les deux panneaux un angle prédéterminé, la réunion des deux

- 3 -

éléments étant réalisée par clavetage à l'aide d'une pièce de raccordement calée entre lesdits flancs des extrémités adjacentes des éléments profilés à raccorder.

Chacune des branches des pièces de raccord est pourvue d'une fente médiane destinée à recevoir une cale. Pour éviter un dégagement accidentel de la cale de la fente dans laquelle elle a été introduite, les parois intérieures de chacune des fentes peuvent être pourvues d'au moins un bourrelet et les faces latérales de la cale d'au moins une rainure correspondante dans laquelle vient s'engager le bourrelet.

D'autres particularités et caractéristiques ressortiront de la description détaillée d'un mode de réalisation présenté ci-dessous à titre d'illustration, en référence aux figures annexées dans lesquelles :

La figure 1 est une vue schématique en coupe verticale à travers une porte de caravane avec un vantail selon la présente invention;

La figure 2 est une vue schématique détaillée à échelle agrandie de la partie périphérique du vantail,

La figure 3 est une vue en perspective d'un premier mode de réalisation d'une pièce de raccordement pour l'assemblage d'un cadre profilé,

La figure 3a est une vue en perspective d'une cale pour les pièces de raccordement selon la figure 3,

La figure 4 est une section transversale à travers une variante de la pièce de raccordement selon la figure 3,

La figure 5 est une vue en plan d'une entretoise pour la réalisation des trous de serrure et

La figure 6 est une coupe schématique suivant le plan VI-VI de la figure 5.

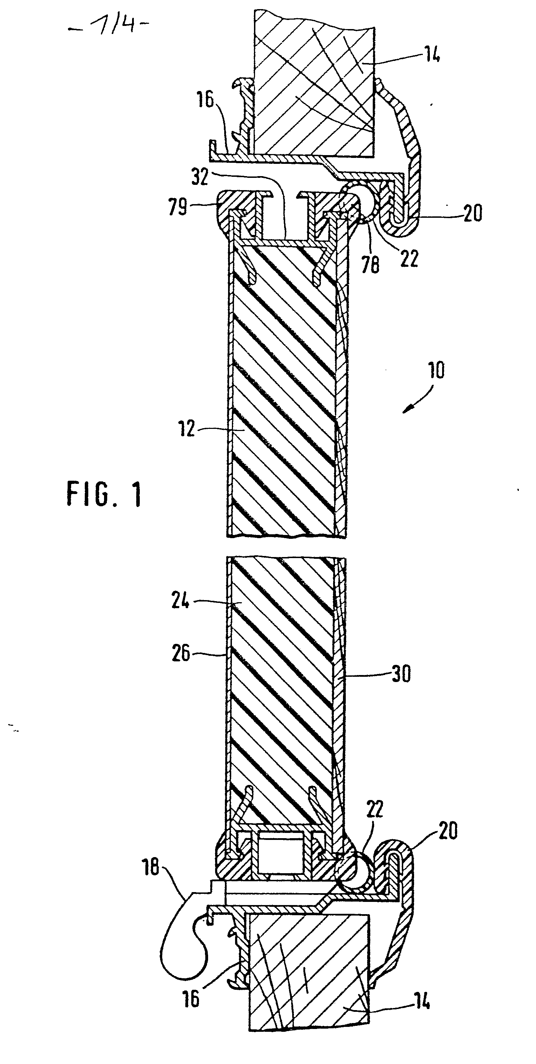

La figure 1 montre, d'une façon générale, une porte désignée dans son ensemble par la référence 10 incorporée dans la baie d'une paroi 14 d'une caravane. Cette porte 10 comporte notamment un vantail 12 monté par des charnières 18 sur un cadre profilé extérieur 16 fixé à la paroi 14. Du côté intérieur de la paroi 14 sont prévus sur le profilé 16 un joint de finition 20 et un joint d'étanchéité 22.

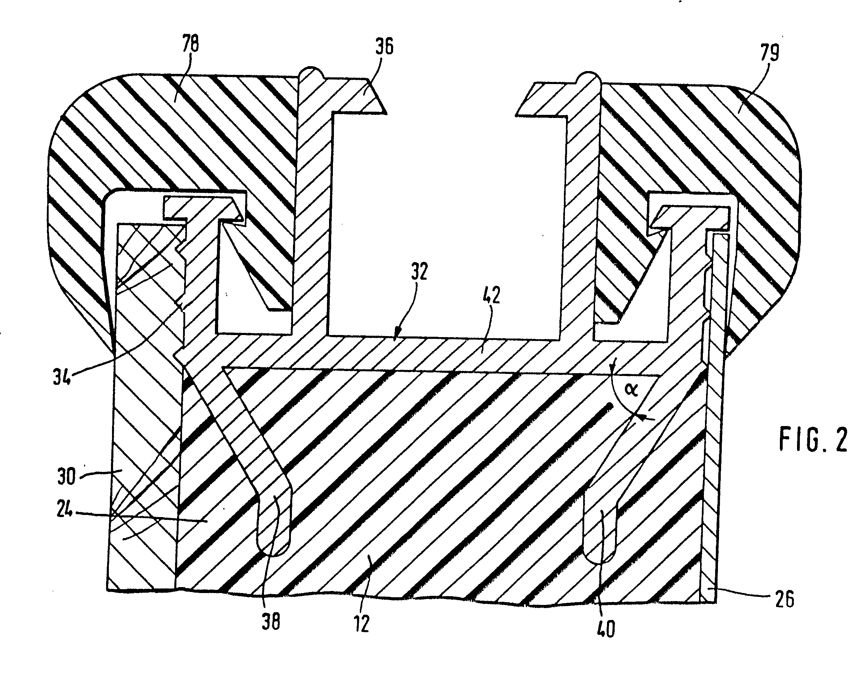

En vue de la description détaillée du vantail 12, on se référera simultanément à la figure 1 et à la figure 2. Le vantail 12 est essentiellement constitué par un corps 24 en matière synthétique expansée comme par exemple, du polyuréthane pris en sandwich entre un panneau intérieur pouvant être en bois 30 et un panneau extérieur 26. Le panneau extérieur sera de préférence en aluminium parce qu'il est exposé aux conditions atmosphériques. Le vantail 12 est bordé à sa périphérie par un cadre 32 constitué par un profilé. Ce profilé sera, de préférence en aluminium, ou éventuellement en plastique. Ce cadre 32 peut présenter des arêtes 34 destinées à coopérer avec des encoches correspondantes dans les panneaux extérieur 26 et intérieur 30 afin d'améliorer la fixation et, surtout, d'éviter des fuites de la matière synthétique liquide injectée lors de la phase de fabrication. Le profilé 32 comporte également un canal ou glissière 36 dont le but essentiel est la fixation ajustable des charnières 18 et qui fait l'objet d'une demande de brevet séparée, déposée conjointement avec la présente au nom de la demanderesse.

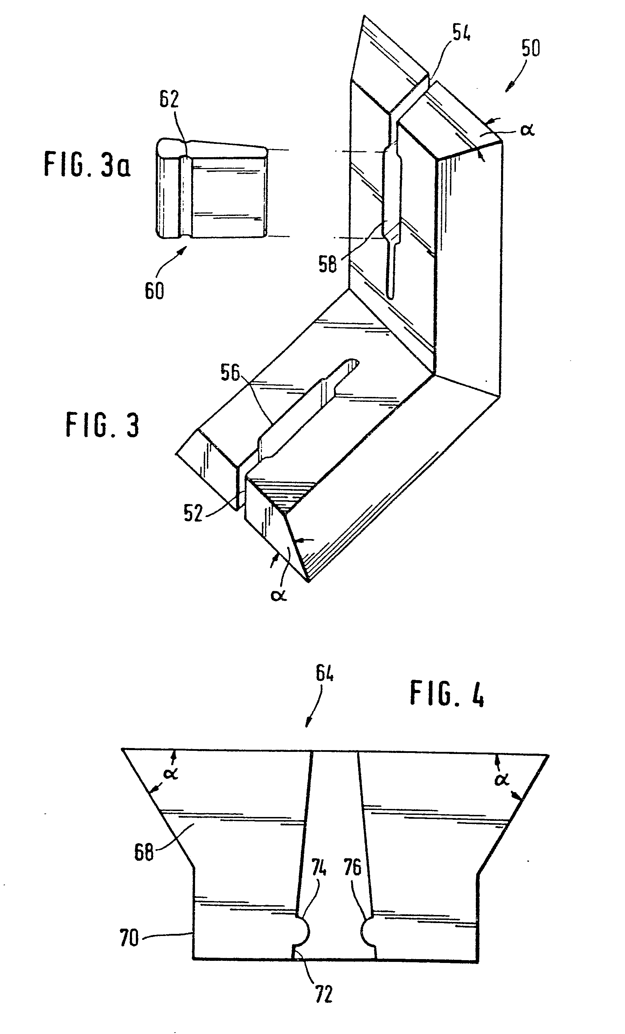

Le cadre profilé 32 comporte également, du côté du corps 24 du vantail 12, une paire de flancs 38, 40 faisant chacun un angle $\alpha$ avec une barre transversale 42 du cadre 32. Selon un mode de réalisation avantageux, l'angle $\alpha$ a une valeur de $60^\circ$, son complément, c'est-à-dire les inclinaisons des flancs 38 et 40 par rapport aux panneaux respectifs 26 et 30 étant de $30^\circ$. L'un des buts des flancs inclinés 38 et 40 est d'assurer une fixation solidaire entre le corps 24 et le cadre 32. Un autre but de ces flancs 38 et 40, notamment de leur inclinaison par rapport à la barre 42 est d'assurer un raccordement stable et solide entre les éléments constitutifs du cadre profilé 32 au moyen de pièces de raccordement décrites ci-dessous en référence à la figure 3 et à la figure 4.

Le cadre 32 peut être constitué d'une seule pièce ou, de préférence, de plusieurs éléments qui seront assemblés avant la fabrication du vantail. La description qui suivra se référera, à titre d'exemple, à un cadre constitué de deux éléments, l'un de ces éléments possédant une forme en "U" pour former les deux montants latéraux ainsi que la traverse supérieure du vantail, alors que le deuxième élément est prévu pour relier les deux branches libres à l'extrémité inférieure du premier élément et former ainsi la traverse inférieure. L'assemblage entre ces deux éléments est réalisé, pour l'exemple concerné, au moyen de pièces de raccordement angulaires représentées sur la figure 3 et désignées par la référence 50.

Ces pièces de raccordement 50 qui sont, de préférence, en matière synthétique, ont une forme en "L" et une section trapézoïdale, les faces obliques formant un angle $\alpha$ avec les faces parallèles, l'angle $\alpha$ étant identique à l'angle $\alpha$ entre les flancs 38 et 40 d'une part et la barre 42, d'autre part. La grandeur de la surface trapézoïdale de la section des pièces de raccordement 50 est sensiblement identique à la surface délimitée par les flancs 38, 40 et la barre 42 du profilé 32, de sorte que les pièces de raccordement 50 peuvent être introduites dans cet espace des profilés. Par conséquent, le raccordement entre les deux éléments constitutifs du cadre profilé 32 est effectué en introduisant les deux branches d'une pièce de raccordement 50 dans les extrémités adjacentes des éléments à raccorder pour former le profilé.

Afin d'assurer un maintien solide de la pièce de raccordement entre les flancs 38 et 40 chacune des branches d'une pièce de raccordement 50 est pourvue d'une fente longitudinale médiane 52, 54, pouvant s'élargir dans la région centrale 56, 58. Après l'introduction des pièces de raccordement 50 entre les flancs 38 et 40 des profilés 32 assemblés, on enfonce une cale 60 telle que représentée sur la figure 3a dans les régions 56 et 58 des fentes 52 et 54, afin d'écarter les deux branches des pièces 50 et de les coincer entre les flancs 38 et 40.

Afin d'assurer le maintien des cales 60 dans les fentes, ces cales peuvent être pourvues d'une rainure 62 dans laquelle vient se loger un bourrelet prévu dans les faces latérales des fentes 52 et 54. Il est possible de prévoir dans chacune des fentes plusieurs bourrelets et, de même plusieurs rainures sur chacune des cales 62. Il est également possible de prévoir les bourrelets sur les cales et les rainures dans les fentes. Il est bien entendu que les élargissements 56, 58 ne sont que facultatifs et que les fentes peuvent également avoir une largeur uniforme sur toute leur longueur.

La figure 4 montre une variante d'une pièce de raccordement telle que montrée sur la figure 3. La pièce de raccordement 64 de la figure 4 se distingue de la pièce de raccordement 50 uniquement par la forme de sa section. Comme on peut le voir sur la figure 4, cette section a une partie trapézoïdale 68 avec des angles $\alpha$ prolongés par une partie rectangulaire 70. La pièce de raccordement 64 convient notamment lorsque les flancs 38 et 40 ont la forme particulière illustrée sur la figure 2, c'est-à-dire que les parties inclinées comportent un prolongement parallèle aux panneuax 26 et 30. Sur la figure 4 on voit également deux bourrelets 74, 76 prévus dans la fente 72 et destinés à coopérer avec des rainures d'une cale selon la figure 3a.

Selon un deuxième mode de réalisation non montré, les pièces de raccordement, au lieu d'être angulaires, peuvent également être rectilignes. La manière de raccordement reste toutefois la même qu'auparavant, c'est-à-dire que les pièces de raccordement sont coincées entre les flancs 38, 40 des extrémités des profilés à assembler. Ce type de pièces de raccordement convient donc lorsque le raccordement a lieu le long d'une section droite.

Il est également possible que les deux branches d'une pièce de raccordement ne forment pas un angle droit, mais un angle aigu ou obtus. D'une façon générale, on peut dire que la forme des pièces de raccordement dépendra de la forme du vantail, de l'endroit de raccordement ainsi que du nombre d'éléments constitutifs du cadre du vantail.

Il faut noter, en outre, que la section trapézoïdale des pièces de raccordement n'est qu'un exemple de réalisation. Cette section pourra avoir différentes formes géométriques permettant son coincement entre les flancs 38 et 40 ou, d'une manière générale, entre les éléments prévus à cet effet sur le profilé 32.

On va décrire maintenant le procédé de fabrication d'un vantail tel que décrit ci-dessus. Après avoir assemblé les cadres profilés 32 au moyen de pièces de raccordement 50 ou 64, on empile dans une presse, prévue à cet effet, un certain nombre de jeux composés chacun d'un panneau 30, d'un cadre profilé 32 et d'un panneau 26. Entre ces différents jeux, on dispose des plaques de séparation rigides qui sont revêtues d'une matière souple pour absorber les tolérances et les pressions d'expansion. Ensuite, on actionne la presse pour serrer, de manière étanche, cet empilement et on injecte à travers un trou prévu dans chacun des cadres 32 de la matière synthétique, par exemple, du polyuréthane liquide à l'intérieur de l'espace délimité par chacun des cadres 32 et ses panneaux associés 26 et 30. Ensuite on maintient la pression pendant un certain temps pour permettre au polyuréthane de s'expanser et de solidifier. Lors de cette phase de solidification et d'expansion, le polyuréthane adhère aux deux panneaux et aux cadres 32 et il se forme un lien solide et durable. Après la phase d'expansion et de solidification on peut extraire les vantaux terminés séparément de la presse.

La finition des vantaux sortis de la presse est réalisée par l'application de joints de finition ou d'étanchéité 78, 79, ainsi que le montage de serrures, d'aérateurs, etc., non montrés. Les joints de finition ou d'étanchéité 78, 79, sont, par exemple, en PVC et ont, outre leur fonction esthétique, le but de supprimer le pont thermique entre la face extérieure du vantail et la face intérieure.

On peut également, à titre de variante, ne pas encore faire intervenir les deux panneaux lors de la phase de fabrication dans la presse, ou ne prévoir qu'un seul panneau par jeu. Dans ce cas, on réalisera dans la presse rien que le corps du vantail en matière synthétique expansée solidaire du profilé éventuellement avec l'un des panneaux. On utilisera bien entendu aussi les plaques de séparation dont le revêtement souple doit avoir la propriété de ne pas adhérer à la matière synthétique expansée. Ce procédé simplifié nécessite, bien entendu, le collage ultérieur du ou des panneaux non appliqués dans la presse.

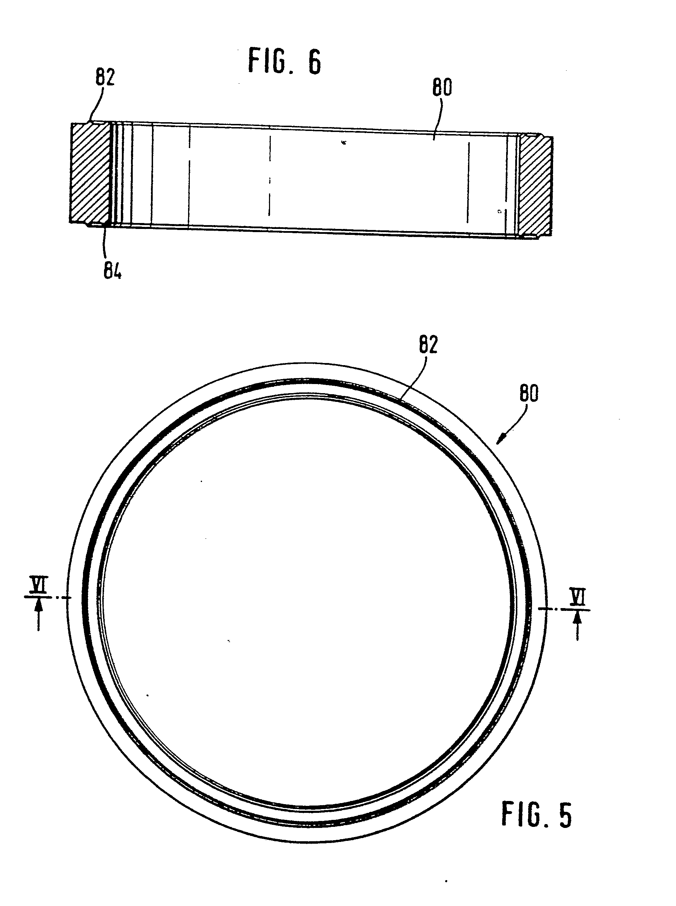

Afin de faciliter le montage d'une serrure, d'un aérateur, etc., et d'éviter de devoir forer à nouveau un trou à travers le corps du vantail extrait de la presse, on prévoit, à l'endroit de la future serrure ou de l'aérateur, etc., une entretoise 80 selon la figure 5, que l'on applique entre les deux panneaux 26 et 30 et qui est destinée à maintenir un creux, non envahi par la matière synthétique, à l'intérieur de l'espace délimité par cette entretoise. La forme de cette entretoise dépendra de la forme de l'ouverture. Sur la figure 5, on a représenté une entretoise 80 de forme cylindrique. La hauteur de cette entretoise correspond à l'écartement entre les panneaux 26 et 30. Afin d'assurer une bonne étanchéité entre les espaces délimités par l'entretoise 80, celle-ci comporte de préférence des arêtes circulaires 82, 84 sur la base supérieure, respectivement inférieure et pénétrant dans les panneaux 26 et 30. Ces arêtes empêchent la pénétration de la matière synthétique liquide dans l'espace à l'intérieur de l'entretoise 80. Les ouvertures correspondantes dans les panneaux 26 et 30 sont de préférence réalisées avant la mise en presse.

D'autres entretoises analogues et de forme appropriée peuvent être prévues pour réaliser d'autres ouvertures, par exemple, pour la mise en place d'un aérateur.

REVENDICATIONS

1. -. Procédé de fabrication d'un vantail de porte de caravane comprenant essentiellement un panneau extérieur et un panneau intérieur appliqués de part et d'autre d'un corps en matière synthétique, ainsi qu'un cadre périphérique, caractérisé en ce que l'on empile dans une presse alternativement un certain nombre de plaques de séparation rigides revêtues d'une matière souple ainsi que des éléments de vantaux comprenant au moins le cadre périphérique, en ce que l'on actionne la presse pour serrer, de manière sensiblement étanche, chaque élément entre les deux plaques adjacentes, en ce que l'on injecte à travers un trou dans chacun des cadres de la matière synthétique, en ce que l'on maintient l'empilement dans la presse jusqu'à ce que la matière synthétique injectée se soit expansée et solidifée et en ce que l'on extrait les éléments avec les corps solidifiés dans la presse.

2. - Procédé selon la revendication 1, caractérisé en ce que l'on applique le panneau extérieur et le panneau intérieur,  par collage, sur les éléments après leur extraction de la presse.

3. - Procédé selon la revendication 1, caractérisé en ce que les éléments de vantaux empilés dans la presse comportent également l'un des deux panneuax, l'autre étant appliqué, par collage, après l'extraction des éléments de la presse.

4. - Procédé selon la revendication 1, caractérisé en ce que les éléments de vantaux empilés dans la presse comportent également le panneau extérieur et le panneau intérieur.

5. - Procédé selon l'une des revendications 1 à 4, caractérisé en ce que l'on forme le cadre périphérique par clavetage d'éléments profilés au moyen de pièces de raccordement.

6. - Procédé selon l'une des revendications 1 à 5, caractérisé en ce que, lors de l'empilement, on incorpore entre chaque couple de panneaux, à l'endroit prévu pour la serrure ou autre ouverture, une ou plusieurs entretoises de forme appropriée pour conserver un espace creux non envahi par la matière synthétique injectée.

7. - Vantail de porte de caravane comprenant un panneau extérieur (26) et un panneau intérieur (30) appliqués de part et d'autre d'un corps (24) en matière synthétique, ainsi qu'un cadre périphérique (32), et obtenu par la mise en oeuvre du procédé selon les revendications 1 à 6, caractérisé en ce que le corps en matière synthétique est en matière expansée à l'intérieur du cadre périphérique (32), le panneau extérieur (26) et le panneau intérieur (30) adhérant solidement sur l'ensemble formé par le cadre (32) et le corps (24) sans intervention de matières adhésives.

8. - Vantail selon la revendication 7, caractérisé en ce que le cadre (24) est constitué par un ou plusieurs éléments profilés réunis bout à bout et présentant, du côté du corps du vantail, deux flancs (38, 40) formant respectivement avec les deux panneaux (26, 30) un angle prédéterminé, la réunion étant réalisée par clavetage à l'aide d'une pièce de raccordement (50) calée entre lesdits flancs (26, 30) des extrémités adjacentes des éléments profilés à raccorder.

9. - Vantail selon la revendication 8, caractérisé en ce que les pièces de raccordement (50) sont pourvues de fentes médianes (52, 54) destinées à recevoir une cale (60).

10. - Vantail selon la revendication 9, caractérisé en ce que les parois intérieures de chacune des fentes sont pourvues d'au moins un bourrelet (74, 76) et en ce qu'au moins l'une des faces latérales de chacune des cales (60) comporte une rainure correspondante (62) dans laquelle vient s'engager le bourrelet (74) (76) ou vice versa.

11. - Vantail selon l'une des revendication 7 à 10, caractérisé par une ou plusieurs entretoises (80) logées entre les deux panneaux (26, 30) à l'endroit prévu pour une ouverture.

12. - Vantail selon la revendication 11, caractérisé en ce que les deux bases de chaque entretoise comportent des arêtes saillantes (82, 84).

———

−1/4−

FIG. 1

FIG. 2

FIG. 3a

FIG. 3

FIG. 4

## FIG. 6

## FIG. 5

**Office européen des brevets**

**RAPPORT DE RECHERCHE EUROPEENNE**

| Catégorie | Citation du document avec indication, en cas de besoin, des parties pertinentes | Revendication concernee | CLASSEMENT DE LA DEMANDE (Int. Cl. ³) |
|---|---|---|---|
| **DOCUMENTS CONSIDERES COMME PERTINENTS** | | | |
| | US - A - 3 334 464 (CHARLES) <br> * Colonne 3, lignes 33-75; colonne 4, lignes 1-75; colonne 5, lignes 1-28; colonne 7, lignes 17-72; figures 1-3 * | 1,4,5, 7,8 | E 06 B 3/72 <br> B 29 D 27/04 |
| | -- | | |
| | CH - A - 542 989 (JEISY) <br> * Colonne 1, lignes 1-22; colonne 2, lignes 2-15; colonne 3, lignes 6-43; colonne 4, lignes 1-14; figures 1-4 * | 1,4,6, 7,11 | **DOMAINES TECHNIQUES RECHERCHES (Int. Cl. ³)** |
| | -- | | |
| | FR - A - 2 214 813 (BOISE) <br> * Page 1, lignes 24-40; page 2, lignes 1-37; page 3, lignes 1-8; figure * | 1,4,7 | E 06 B <br> B 29 D |
| | -- | | |
| | FR - A - 2 315 585 (PRYCE-JONES) <br> * Page 2, lignes 28-39; page 3, lignes 1-17 et 34-39; page 4, lignes 1 et 11-15; figures 1-4 * | 1,6,11 | |
| | -- | | **CATEGORIE DES DOCUMENTS CITES** |
| | FR - A - 2 156 684 (SALOTHERM) <br> * Page 2, lignes 8-9; page 3, lignes 15-39; page 4, lignes 1-2; figures 1-2 * | 2 | X: particulièrement pertinent <br> A: arrière-plan technologique <br> O: divulgation non-écrite <br> P: document intercalaire <br> T: théorie ou principe à la base de l'invention <br> E: demande faisant interférence |
| | -- | | |
| | US - A - 4 118 895 (GOVERNALE) <br> * Colonne 2, lignes 20-68; colonne 3, lignes 1-10; figures 1-5 * -- ./. | 6,11, 12 | D: document cité dans la demande <br> L: document cité pour d'autres raisons |
| | | | &: membre de la même famille, document correspondant |

Le présent rapport de recherche a été établi pour toutes les revendications

| Lieu de la recherche | Date d'achevement de la recherche | Examinateur |
|---|---|---|
| La Haye | 08-10-1980 | DEPOORTER |

OEB Form 1503.1 06.78

Office européen
des brevets

**RAPPORT DE RECHERCHE EUROPEENNE**

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | FR - A - 2 131 575 (ALUMINIUM) <br> * Page 4, lignes 5-37; page 5, lignes 1-5 et 34-37; page 6, lignes 1-37; page 7, lignes 1-33; figures 5-14 * <br> -- | 9,10 | |
| A | US - A - 3 697 633 (EDGAR) <br> * Colonne 4, lignes 41-68; colonne 5, lignes 1-17 et 61-65; colonne 6, lignes 18-34 et 63-67; colonne 7, lignes 1-67; colonne 8, lignes 1-51; figures 1-5 * <br> -- | 1,2 | DOMAINES TECHNIQUES RECHERCHES (Int. Cl. ³) |
| A | US - A - 2 385 352 (DAVIS) <br> * Page 2, colonne 2, lignes 24-75; page 3, colonne 1, lignes 1-15; figure 4 * <br> ---- | 1 | |